# EUROPÄISCHE PATENTSCHRIFT

(11) **EP 1 972 436 B1**
(45) Veröffentlichungstag und Bekanntmachung des Hinweises auf die Patenterteilung: **13.03.2013**
(21) Anmeldenummer: 08150635.4
(22) Anmeldetag: 25.01.2008
(51) Int. Cl.: B32B 3/24, B32B 27/12, B60R 13/02, D06N 3/00, D06N 7/00, B32B 37/14, B32B 37/24

(54) **Verfahren zur Herstellung von mehrschichtigen Kunststofffolien**
Method for producing multi-layered plastic foils
Procédé pour la fabrication de feuilles plastiques multicouches

(30) Priorität: 20.03.2007 DE 102007013163
(43) Veröffentlichungstag der Anmeldung: 24.09.2008
(73) Patentinhaber: Benecke-Kaliko AG, 30419 Hannover (DE)
(72) Erfinder: Gelszinnus, Uwe, 31319 Sehnde (DE); Jahncke, Manfred, Dr., 31515 Wunstorf (DE); Gerken, Andreas, Dr., 30161 Hannover (DE); Zürbig, Claus, Dr., 30171 Hannover (DE); Prömpers, Günter, Dr., 29323 Wietze (DE)
(74) Vertreter: Finger, Karsten

(56) Entgegenhaltungen:
- DE-A1- 2 639 095
- DE-A1- 4 035 822
- DE-A1- 4 214 389
- DE-A1- 4 400 894
- DE-A1- 10 039 249
- DE-A1-102004 009 245
- DE-U1- 9 303 393
- US-A- 5 382 461

## Beschreibung

Die Erfindung betrifft ein Verfahren zu Herstellung von mehrschichtigen Kunststofffolien mit einer dreidimensionalen Oberflächenstruktur, insbesondere als Sitzbezüge oder als Beschichtung von Innenverkleidungsteilen für Kraftfahrzeuge, wobei die mehrschichtige Kunststofffolie mindestens aus einer äußeren Dekorschicht und einer darunter liegenden Schicht aus einem Textilverbund oder Vliesstoff als druckelastischem Trägermaterial besteht.

Mehrschichtige Folien bestehen oft aus einer oberen / äußeren Schicht aus einem Textilstoff, einem Kunststoff, Kunstleder, Gewebe, Leder oder ähnlichem flächigen Material und einer oder mehreren darunter liegenden Trägerschichten, z.B. Kunststoffschäumen oder textilen Trägermaterialien. Verfahren zum Auftragen einer sichtbaren Kunststoffschicht auf ein Trägermaterial sind in vielerlei Ausführungen bekannt.

Die äußere Schicht kann dabei als Feststoff oder Flüssigkeit aufgetragen werden. Im ersten Fall werden vorgefertigte Folien, auch Schaumfolien, mittels Kleber oder auch durch Anschmelzen mit der Trägerschicht dauerhaft verbunden. Diesen Vorgang wird als Kaschierung oder Laminierung bezeichnet; beim Einsatz von Gasflammen zum Anschmelzen der Folienoberfläche spricht man von Flammkaschierung. Nachteilig bei dem Aufbringen von z. B. Polyurethanschäumen durch Flammkaschieren sind u.a. die Emissionen, die nicht nur in die Umgebung gelangen, sondern auch später im Schichtverbund noch zu finden sind und von dort austreten.

Eine weitere Möglichkeit ist das Einstreuen von schmelzbaren, pulverisierten Kunststoffen (Thermoplasten) auf die Trägerschicht und anschließendes Aufschmelzen und Verdichten mittels heißer Walzen, die den Kunststoff gegen das Trägermaterial pressen. Solche Thermoplaste können auch mittels Extrusion oder über Kalanderwerke aufgeschmolzen und direkt auf die Trägerschicht aufgetragen und angepresst werden. Die Verwendung von PVC und thermoplastischen Polyurethanen (TPU) ist in diesen Verfahren weit verbreitet. Die Applikation aus flüssiger Phase findet ebenso breite Verwendung. Es kann sich dabei um Lösungen von Kunststoffen in organischen Lösemitteln, lösemittelfreie, reaktive Massen (High Solids Polyurethane), wässrige Dispersionen oder Plastisole handeln, die durch geeignete Auftragsverfahren mit dem Trägermaterial verbunden werden. Die Auftragung erfolgt durch Tauchen, Rakeln, Walzenauftrag, Druck oder Spritzverfahren. Im jedem Fall ist Trocknung bei höheren Temperaturen im Bereich 150 bis 190°C über mehrere Minuten notwendig, um die Beschichtung entsprechend zu verfestigen und die Gebrauchsfähigkeit herzustellen. Um ein unerwünschtes Absacken der flüssigen Beschichtungsmittel in die Trägerschicht während der Auftragung zu verhindern und geeignete Mengen anwenden zu können, wird die Viskosität so eingestellt, dass eine pastenähnliche Konsistenz vorliegt.

Neben der direkten Beschichtung der Trägerschicht gibt es die Umkehrbeschichtung oder auch Transferbeschichtung. Hier wird die äußere Schicht zunächst auf ein Trennpapier oder einen ähnlichen (Hilfs-)Träger gebracht, ausgehärtet und in einem zweiten Schritt auf die eigentliche Trägerschicht kaschiert. Anschließend kann nach Trocknung und festem Verbund der Beschichtung zum Textil das Trennpapier abgezogen und mehrfach wieder verwendet werden. Der Vorteil dieses Verfahrens liegt zum einen in der Möglichkeit, über eine Vorprägung des Trennpapiers der äußeren Schicht eine definierte Oberflächenstruktur, etwa eine Narbung zu geben, zum anderen kann der Verbund zum Träger besser gesteuert werden als in der Direktbeschichtung. Daher sind die so hergestellten Artikel oft wesentlich weicher.

Die DE 195 34 252 A1 offenbart ein Verfahren zur Herstellung einer mehrlagigen Bahn insbesondere als Polsterbezugsmaterial für Fahrzeugsitze, wobei die Bahn im Wesentlichen aus einem Vliesstoff mit hauptsächlich senkrecht zur Vliesstoffoberfläche angeordneten Fasern und einem außen liegenden Bezugsstoff, d.h. z.B. aus ebenfalls einem Textilstoff, einem Kunststoff, Kunstleder, Gewebe, Leder oder ähnlichem flächigen Material besteht. Das Verfahren besteht dabei darin, dass mehrere üblicherweise vorhandene Herstellungsschritte in einem einzigen Verfahrensschritt zusammengefasst werden. Dieser eine Verfahrensschritt kennzeichnet sich dadurch, dass Vliesstoff und Bezugsstoff zwischen zwei Führungsbändern fortlaufend geführt, erwärmt, verfestigt und verklebt werden, bis die mehrlagige Bahn als Endprodukt fertig gestellt ist.

Als Vliesstoff ist hierbei eine flächige Faser- oder Filamentanordnung zu verstehen, bei der die Fasern durch Vlieswirken, Nadeln, thermisches Anschmelzen oder Kleben etc. miteinander verbunden bzw. verfestigt sind, also z.B. vermaschte Polfasern, velourisiertes Nadelvlies, Malivlies, Multiknit etc.

Auch wenn das hier offenbarte Verfahren mehrere bekannte Herstellungsschritte in einem einzigen Verfahrensschritt zusammenfasst, so ist es an sich doch noch recht aufwendig und kostenintensiv.

Die DE 91 16 536.9 U1 offenbart einen mehrschichtigen Stoff für Sitzbezüge in Fahrzeugen, der aus einer unteren Lage in Form eines Vliesgewirkes, einer oberen Lage in Form eines flächigen Bezugsstoffes und aus einer die beiden äußeren Lagen verbindenden Zwischenlage besteht. Im Unterschied zu den bis dahin verwendeten Zwischenlagen aus Schaumstoff wird hier eine Zwischenlage aus senkrecht zu den Oberflächen ausgerichteten Florfasern gebildet, die senkrecht/aufrecht aus dem unteren und als Florlage/Florseite ausgebildeten Vliesgewirk abragen.

Die Zwischenlage ist somit sozusagen Bestandteil der unteren Lage, wobei die Spitzen oder Enden der senkrecht abragenden Florfasern mit der Unterseite der oberen Lage, d.h. des flächigen Bezugsstoffes verklebt sind, beispielsweise durch Heißkleber. Zum einen soll durch die damit im Wesentlichen punktuelle Verklebung der Florfasern mit dem Bezugsstoff ein ausreichender Luft- und Feuchtigkeitsaustausch entstehen und zum anderen ist durch die Ausbildung und Anzahl der abragenden Florfasern das druckelastische Verhalten des mehrschichtigen Stoffes beliebig einzustellen.

Nachteilig hierbei ist die relativ aufwendige und kostenintensive Herstellung dieses mehrschichtigen Stoffes in seinen einzelnen Schichten und in Bezug auf die Verklebung.

Die DE 101 39 843 B4 offenbart einen Polstervliesstoff aus einem durch Fadenmaschen verfestigten Fasermaterial mit ebenfalls dreidimensionaler Faseranordnung für den Einsatz als Unterpolsterstoff beispielsweise zur Substitution von Polyurethan(PUR)-Schäumen bei Bezugsstoffen für Automobilsitze. Zur Steigerung der Querfestigkeit und Druckelastizität solcher Polstervliesstoffe ist hier die Struktur der Polfasern, d.h. der senkrecht (quer) zur Oberfläche angeordneten Fasern, so ausgebildet, dass die vertikal zum Vliesstoffquerschnitt angeordneten Faserteile bzw. -schlingen über die gesamte Oberfläche der Faserpolstruktur eine hohe Parallelität und Höhengleichheit aufweisen.

Zusätzlich ist vorgesehen, dass mindesten 1200 solcher Faserteile bzw. -schlingen pro Quadratzentimeter vorhanden sind und dass immer ein Ende der Faserteile bzw. -schlingen im Vliesstoffquerschnitt eingebunden ist. Diese Konstruktion, die ähnlich der in der oben bereits genannten DE 91 16 536.9 U1 ausgebildet ist, fällt ebenfalls durch eine relativ aufwendige und kostenintensive Herstellung auf.

Der Gegenstand der DE 201 22 399 U1 betrifft ein Formteil für die Fahrzeuginnenausstattung, das aus mehreren auf ein Spritzgussteil aufgebrachten Schichten besteht, nämlich einer äußeren Oberschicht (z.B. Kunstleder oder -folie), einer Zwischenschicht aus Vliesstoff und einer am Spritzgussteil angeordneten elastischen Barrierefolie.

Die Zwischenschicht aus Vliesstoff ist voluminös und druckelastisch ausgebildet und weist eine vorzugsweise vertikale Faseranordnung auf. Die vertikalen Fasern können dabei mit einem Ende in einem unteren Teilbereich der Zwischenschicht aus mit Maschen /Fasermaschen verfestigtem Vlies angeordnet sein.

Die DE 101 62 463 B4 offenbart die Verwendung eines durch Maschen verfestigten Vliesstoffes als textiler Träger für Beschichtungen. Dabei weisen - ähnlich dem in der DE 101 39 843 B4 offenbarten Polstervliesstoff - die vertikal zum Vliesstoffquerschnitt angeordneten Faserteile bzw. -schlingen über die gesamte Oberfläche der Faserpolstruktur eine hohe Parallelität und Höhengleichheit und sind mit einem Ende im Vliesstoffquerschnitt mechanisch eingebunden.

Auch bei den in den beiden letztgenannten Dokumenten zum Stand der Technik genannten Gegenständen ist die Herstellung des Schichtverbundes und der einzelnen Schichten relativ aufwendig.

Die US 5 382 461 A offenbart ein Laminat aus einem exdrudierten thermoplastischen Film und einer nicht verwebten Matte aus im Wesentlichen geschichteten Fasern, in welcher durch eine Dehnung über die Mattendicke eine Veränderung der Lage der einzelnen Fasern erreicht wird, was zu einer besseren Haftung zwischen thermoplastischem Film und Fasermatte führt, ohne Durchdringungen (Pinholes) der Fasern zu erzeugen.

Die DE 10 2004 009245 A1 offenbart ein Kunststoffformteil aus einer Vliesschicht und einer Schicht aus Kunststoffmaterial, bei dem die Vliesschicht eine Strukturierung oder Formgebung erfährt, um bei weiterer Bearbeitung formstabil zu bleiben.

Die DE 42 14 389 A1 offenbart eine dreilagige Schicht als Bezugsmaterial eines Ausstattungsteiles für einen Fahrzeuginnenraum, bei dem als mittlere Schicht ein Wirrfaser-Vlies vorgesehen ist, welches druckweich ist und somit dem gesamten Aufbau angenehme Griffigkeit verleiht.

Die DE 29 39 095 A1 offenbart ein Verfahren zur Herstellung eines dekorativen Verbundstoffes, bei dem eine Folie aus außenliegender Kunststoffhaut, mittlerer Schaumstoffschicht und unten liegendem gewirkten oder gestrickten Flor einer Nachbehandlung unterworfen wird, die Schrumpfungen oder Spannungen im System löst.

Durch die Nachbehandlung entsteht eine Oberflächenstrukturierung, die sonst nur durch Prägeverfahren zu erzeugen ist.

Die DE 93 03 393 U1 offenbart einen zweischichtigen textilen Verdeckstoff für Fahrzeugverdecke, der aus einem Polyacryl- oder Polyestergewebe besteht, auf welches rückseitig eine PVC-Schicht aufkaschiert wird.

Die DE 44 00 894 A1 offenbart ein Verfahren zum Herstellen eines Innenbauteiles eines Kraftfahrzeuges, bei dem ein Schmelzfaser-Vlies mit einem weiteren Teppich- oder Dekorvlies verbunden wird, wobei die Verbindung durch thermoplastische KIebung erfolgt.

Die DE 100 39 249 A1 offenbart eine besondere Behandlung von textilen, beschichteten, flexiblen Flächengebilden, die einen Restschrumpf aufweisen, die darin besteht, dass zunächst die textilen Flächengebilde mit einer PUR-Beschichtung versehen und danach einer Wärmebehandlung unterzogen werden.

Für die Erfindung bestand also die Aufgabe, eine weitere Möglichkeit zur Herstellung eines Polsterbezugsmaterials für Fahrzeugsitze bzw. einer mehrlagigen Folie zur Beschichtung insbesondere von Innenverkleidungsteilen für Fahrzeuge bereitzustellen, die das Herstellungsverfahren wesentlich vereinfacht und kostengünstig und gleichermaßen umweltfreundlich gestaltet. Weiterhin soll die mehrlagige Folie eine ansprechende Haptik, d.h. eine angenehm "weiche" Griffigkeit bereitstellen.

Gelöst wird diese Aufgabe durch die Merkmale des Hauptanspruchs. Weitere vorteilhafte Ausbildungen sind in den Unteransprüchen offenbart.

Dabei besteht der Textilverbund oder Vliesstoff aus überwiegend senkrecht zur Oberfläche ausgerichteten Fasern. Mindestens ein Ende der senkecht zur Oberfläche ausgerichteten Fasern wird auf der Rückseite der noch nicht ausgehärteten äußeren Dekorschicht in letztere eingebracht und durch Aushärtung mit der Dekorschicht verbunden.

Überraschenderweise hat sich nämlich gezeigt, dass mit direkt in der noch nicht ausgehärteten Dekorschicht eingelagerten und dann mit der Dekorschicht durch Aushärtung verbundenen Fasern nicht nur eine besonders kostengünstige und einfache Herstellung möglich ist, sondern auch eine mehrschichtige Kunststofffolie mit ausgezeichneter Haptik und hervorragenden druckelastischen Eigenschaften entsteht.

Als Vliesstoff kann hierbei auch Recyclat verwendet werden, also beispielsweise ein aus zerkleinerten und zerfaserten Kunststofflaschen hergestellter Grundstof, der im Rahmen der Wiederverwendung für die Herstellung des Vliesstoffes genutzt wird.

Eine solche mehrschichtige Kunststofffolie ist feuchtigkeitsresistent und langlebig und ist daher auch besonders geeignet zur Anwendung als Polstermaterial im Wohn- und Möbelbereich, im Boot- und Fahrzeugbereich, oder als Schallschutzmaterial für Möbel, Türen oder Wände.

Eine vorteilhafte Weiterbildung besteht darin, dass der Textilverbund oder Vliesstoff im Umkehrstreichverfahren auf die Rückseite der äußeren Dekorschicht aufgebracht wird, wobei mindestens ein Ende der senkecht zur Oberfläche ausgerichteten Fasern in den noch flüssigen Strich der äußeren Dekorschicht eingebracht wird. Das Umkehrstreichverfahren ist ein besonders einfaches Beschichtungsverfahren, welches ohne großen Aufwand an Maschinen auskommt und für das Einbringen der Fasern in eine noch flüssige Dekorschicht besonders geeignet ist.

Ähnlich gut geeignet, wenn auch in Bezug auf den maschinellen Aufwand etwas umfangreicher, sind weitere vorteilhafte Ausbildungen des Verfahrens, die darin bestehen, dass der Textilverbund oder Vliesstoff durch thermisches Kaschieren auf die Rückseite der äußeren Dekorschicht aufgebracht wird, wobei mindestens ein Ende der senkecht zur Oberfläche ausgerichteten Fasern in die durch die thermische Aktivierung noch flüssige äußere Dekorschicht eingebracht wird, oder darin, dass der Textilverbund oder Vliesstoff auf die Rückseite einer extrudierten und noch nicht ausgehärteten äußeren Dekorschicht aufgebracht wird, wobei mindestens ein Ende der senkecht zur Oberfläche ausgerichteten Fasern in die durch die noch nicht ausgehärtete äußere Dekorschicht eingebracht wird.

Da insbesondere bei der Extrusion die eingebrachte Prozesswärme die aus Kunststoffmaterial bestehende Dekorschicht ohne zusätzliche Heizungen noch eine Weile in flüssigem, nicht ausgehärteten Zustand hält, wird das Aufbringen des Vliesstoffs auf einfache und energiesparende Weise möglich.

Weitere vorteilhafte Weiterbildung bestehen darin, dass der Textilverbund oder Vliesstoff auf die Rückseite einer äußeren Dekorschicht aus Polyurethan (PU), aus Polyvinylchlorid (PVC), oder aus thermoplastischem Polyolefin (TPO) aufgebracht wird. Aufgrund ihrer Flexibilität und ihre in Bezug auf Oberflächenstrukturierung oder Narbung gute Verarbeitbarkeit ergeben diese Kunststoffe zusammen mit dem aufkaschierten Vliesstoff eine Folie mit ausgezeichneten druckelastischen Eigenschaften.

Eine weitere vorteilhafte Ausbildung zur Steigerung der Druckelastizität besteht darin, dass der Textilverbund oder Vliesstoff aus überwiegend senkrecht zur Oberfläche ausgerichteten Fasern besteht, welche mit Hilfe einer Schlingen- oder Maschenstruktur verfestigt sind. Dabei können die Maschen oder Schlingen jeweils im Wesentlichen einseitig, beidseitig oder mittig in dem Textilverbund oder Vliesstoff angeordnet sein. Gut geeignet für eine solche Ausbildung sind damit Nähwirk-Vliestoffe, beispielsweise die an sich bekannten Vliesstoffe wie Multiknit (beidseitig vermaschtes Längsfaservlies mit senkrecht stehenden Faserteilen), Malivlies (Querfaservlies durch Maschen aus Faserbündeln des Vlieses verfestigt) oder Maliwatt (Querfaservliese durch Nähfaden mittels Kettstichnähten verfestigt).

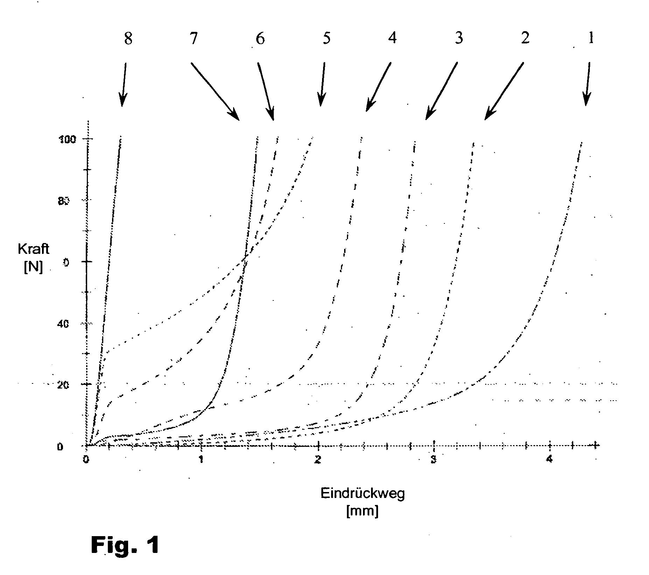

Anhand des Kraft-Weg-Diagramms in der Fig. 1 sollen die ausgezeichneten druckelastischen Eigenschaften einer erfindungsgemäßen und im Umkehrstreichverfahren hergestellten Kunststofffolie mit einer Dekorschicht aus PVC näher erläutert werden.

Aufgetragen sind dort die Ergebnisse der Messung des Griff Eindrückweges der erfindungsgemäßen Kunststofffolie im Vergleich zu herkömmlichen mehrschichtigen Folien mit aufkaschierten Schäumen, Abstandsgewirken etc. Der gemessene Weg ist hierbei der Griff-Eindrückweg beim Eindrücken der Kunststofffolie von der Außenseite (Oberseite). Dieser Weg gilt als Maß für die Weichheit bzw. die Druckelastizität oder "Eindruck-Haptik". Ebenfalls ist die jeweils zugehörige Kraft aufgetragen.

Die Prüfung wurde in Anlehnung an das VDA Prüfblatt 237-101, Anhang A durchgeführt, wobei die Druckprüfung auf einer Universalprüfmaschine mit einem Druckstempel eines Durchmessers von D = 14 mm (A = 154 mm²), einer Prüfgeschwindigkeit von 5 mm/min und einer Vorkraft von 0,02 N erfolgte. Die Prüfung wurde bis zu einer Kraft von 105 N durchgeführt und die Messkurven dann aufgezeichnet.

Die Kurve 1 zeigt das druckelastische Verhalten der erfindungsgemäßen und im Umkehrstreichverfahren hergestellten Kunststofffolie mit einem Textilverbund oder Vliesstoff aus überwiegend senkrecht zur Oberfläche ausgerichteten Fasern, welche mit Hilfe einer Schlingen- oder Maschenstruktur verfestigt sind. Die die Kurven 2 bis 8 repräsentieren die herkömmlichen mehrschichtigen Folien mit Schaumrücken oder üblichen Textilrücken. Deutlich ist an der progressiv verlaufenden, aber zunächst lange in sehr flacher Steigung verlaufenden Kurve 1 für den Eindrückweg, d.h. also an der bereits hohen Eindrücktiefe (in mm) bei kleiner Kraft (in Newton) zu erkennen, dass die mit dem erfindungsgemäßen Verfahren hergestellte Kunststofffolie eine erheblich größere Weichheit bzw. die Druckelastizität besitzt als die übrigen Folien.

## Patentansprüche

1. Verfahren zur Herstellung von mehrschichtigen Kunststofffolien mit einer dreidimensionalen Oberflächenstruktur, insbesondere als Sitzbezüge oder als Beschichtung von Innenverkleidungsteilen für Kraftfahrzeuge, wobei die mehrschichtige Kunststofffolie mindestens aus einer äußeren Dekorschicht und einer darunter liegenden Schicht aus einem Textilverbund oder Vliesstoff als druckelastischem Trägermaterial besteht, wobei der Textilverbund oder Vliesstoff auf der Rückseite der noch nicht ausgehärteten äußeren Dekorschicht in letztere eingebracht und durch Aushärtung mit der Dekorschicht verbunden wird, **dadurch gekennzeichnet, dass** der Textilverbund oder Vliesstoff aus überwiegend senkrecht zur Oberfläche ausgerichteten Fasern besteht und mindestens ein Ende der senkrecht zur Oberfläche ausgerichteten Fasern mit der Dekorschicht verbunden wird.

2. Verfahren nach Anspruch 1, **dadurch gekennzeichnet, dass** der Textilverbund oder Vliesstoff im Umkehrstreichverfahren auf die Rückseite der äußeren Dekorschicht aufgebracht wird, wobei mindestens ein Ende der senkrecht zur Oberfläche ausgerichteten Fasern in den noch flüssigen Strich der äußeren Dekorschicht eingebracht wird.

3. Verfahren nach Anspruch 1, **dadurch gekennzeichnet, dass** der Textilverbund oder Vliesstoff durch thermisches Kaschieren auf die Rückseite der äußeren Dekorschicht aufgebracht wird, wobei mindestens ein Ende der senkrecht zur Oberfläche ausgerichteten Fasern in die durch die thermische Aktivierung noch flüssige äußere Dekorschicht eingebracht wird.

4. Verfahren nach Anspruch 1, **dadurch gekennzeichnet, dass** der Textilverbund oder Vliesstoff auf die Rückseite einer extrudierten und noch nicht ausgehärteten äußeren Dekorschicht aufgebracht wird, wobei mindestens ein Ende der senkecht zur Oberfläche ausgerichteten Fasern in die noch nicht ausgehärtete äußere Dekorschicht eingebracht wird.

5. Verfahren nach Anspruch 1 bis 4, **dadurch gekennzeichnet, dass** der Textilverbund oder Vliesstoff auf die Rückseite einer äußeren Dekorschicht aus Polyurethan (PU) aufgebracht wird.

6. Verfahren nach Anspruch 1 bis 4, **dadurch gekennzeichnet, dass** der Textilverbund oder Vliesstoff auf die Rückseite einer äußeren Dekorschicht aus Polyvinylchlorid (PVC) aufgebracht wird.

7. Verfahren nach Anspruch 1 bis 4, **dadurch gekennzeichnet, dass** der Textilverbund oder Vliesstoff auf die Rückseite einer äußeren Dekorschicht aus thermoplastischem Polyolefin (TPO) aufgebracht wird.

8. Verfahren nach Anspruch 1 bis 7, **dadurch gekennzeichnet, dass** der Textilverbund oder Vliesstoff aus überwiegend senkrecht zur Oberfläche ausgerichteten Fasern besteht, welche mit Hilfe einer Schlingen- oder Maschenstruktur verfestigt sind.

## Claims

1. Process for producing multi-layered plastics foils with a three-dimensional surface structure, in particular as seat coverings or as coating of internal cladding parts for motor vehicles, where the multi-layer plastics foil is composed at least of an exterior decorative layer and of a layer, situated thereunder, made of a textile composite or non-woven, as impressible substrate material, where the textile composite or non-woven is introduced into the exterior decorative layer on the reverse side while the said layer has not yet hardened, and is bonded via hardening with the decorative layer, **characterized in that** the textile composite or non-woven is composed of fibres oriented predominantly perpendicularly to the surface and at least one end of the fibres oriented perpendicularly to the surface is bonded with the decorative layer.

2. Process according to Claim 1, **characterized in that** the textile composite or non-woven is applied to the reverse side of the exterior decorative layer in the transfer coating process, where at least one end of the fibres oriented perpendicularly to the surface is introduced into the exterior-decorative-layer coating while it is still flowable.

3. Process according to Claim 1, **characterized in that** the textile composite or non-woven is applied to the reverse side of the exterior decorative layer by thermal lamination, where at least one end of the fibres oriented perpendicularly to the surface is introduced into the exterior decorative layer which is still flowable by virtue of the thermal activation.

4. Process according to Claim 1, **characterized in that** the textile composite or non-woven is applied to the reverse side of an extruded exterior decorative layer while the said layer has not yet hardened, where at least one end of the fibres oriented perpendicularly to the surface is introduced into the exterior decorative layer while the said layer has not yet hardened.

5. Process according to any of Claims 1 to 4, **characterized in that** the textile composite or non-woven is applied to the reverse side of an exterior decorative layer made of polyurethane (PU).

6. Process according to any of Claims 1 to 4, **characterized in that** the textile composite or non-woven is applied to the reverse side of an exterior decorative layer made of polyvinyl chloride (PVC).

7. Process according to any of Claims 1 to 4, **characterized in that** the textile composite or non-woven is applied to the reverse side of an exterior decorative layer made of thermoplastic polyolefin (TPO).

8. Process according to any of Claims 1 to 7, **characterized in that** the textile composite or non-woven is composed of fibres oriented predominantly perpendicularly to the surface which have been strengthened with the aid of a loop structure or mesh structure.

## Revendications

1. Procédé de fabrication de feuilles plastiques multicouches à structure de surface tridimensionnelle, notamment en tant que revêtements de sièges ou en tant que revêtements de parties d'habillage intérieur d'automobiles, la feuille plastique multicouche étant constituée d'au moins une couche décorative extérieure et d'une couche sous-jacente en un composite textile ou un non-tissé en tant que matériau support élastique à la pression, le composite textile ou le non-tissé étant inséré dans la couche décorative extérieure encore non durcie sur le côté arrière de cette dernière et relié avec la couche décorative par durcissement, **caractérisé en ce que** le composite textile ou le non-tissé est constitué de fibres principalement orientées perpendiculairement à la surface et au moins une extrémité des fibres orientées perpendiculairement à la surface est reliée avec la couche décorative.

2. Procédé selon la revendication 1, **caractérisé en ce que** le composite textile ou le non-tissé est appliqué sur le côté arrière de la couche décorative extérieure par un procédé d'enduction inverse, au moins une extrémité des fibres orientées perpendiculairement à la surface étant insérée dans la couche encore liquide de la couche décorative extérieure.

3. Procédé selon la revendication 1, **caractérisé en ce que** le composite textile ou le non-tissé est appliqué sur le côté arrière de la couche décorative extérieure par stratification thermique, au moins une extrémité des fibres orientées perpendiculairement à la surface étant insérée dans la couche décorative extérieure encore liquide par activation thermique.

4. Procédé selon la revendication 1, **caractérisé en ce que** le composite textile ou le non-tissé est appliqué sur le côté arrière d'une couche décorative extérieure extrudée et encore non durcie, au moins une extrémité des fibres orientées perpendiculairement à la surface étant insérée dans la couche décorative extérieure encore non durcie.

5. Procédé selon les revendications 1 à 4, **caractérisé en ce que** le composite textile ou le non-tissé est appliqué sur le côté arrière d'une couche décorative extérieure en polyuréthane (PU).

6. Procédé selon les revendications 1 à 4, **caractérisé en ce que** le composite textile ou le non-tissé est appliqué sur le côté arrière d'une couche décorative extérieure en polychlorure de vinyle (PVC).

7. Procédé selon les revendications 1 à 4, **caractérisé en ce que** le composite textile ou le non-tissé est appliqué sur le côté arrière d'une couche décorative extérieure en polyoléfine thermoplastique (TPO).

8. Procédé selon les revendications 1 à 7, **caractérisé en ce que** le composite textile ou le non-tissé est constitué de fibres principalement orientées perpendiculairement à la surface, qui sont consolidées à l'aide d'une structure de noeuds ou de mailles.
